# EUROPÄISCHE PATENTSCHRIFT

(11) **EP 3 431 913 B1**
(45) Veröffentlichungstag und Bekanntmachung des Hinweises auf die Patenterteilung: **14.10.2020**
(21) Anmeldenummer: 18183596.8
(22) Anmeldetag: 16.07.2018
(51) Int. Cl.: F28F 3/02, F28D 9/00, B60H 1/22

(54) **ERWÄRMUNGSVORRICHTUNG FÜR FLUIDE IN EINEM KFZ**
HEATING DEVICE FOR FLUIDS IN A MOTOR VEHICLE
DISPOSITIF DE CHAUFFAGE POUR FLUIDES DANS UNE VOITURE AUTOMOBILE

(30) Priorität: 17.07.2017 DE 102017006719
(43) Veröffentlichungstag der Anmeldung: 23.01.2019
(73) Patentinhaber: Eichenauer Heizelemente GmbH & Co. KG, 76870 Kandel (DE)
(72) Erfinder: Starck, Roland, 76756 Bellheim (DE)
(74) Vertreter: Twelmeier Mommer & Partner

(56) Entgegenhaltungen:
- EP-A1- 0 854 345
- DE-A1- 3 715 194
- DE-A1- 10 320 750
- DE-A1-102010 029 663
- US-A1- 2014 091 453

## Beschreibung

Die Erfindung betrifft eine Erwärmungsvorrichtung für Fluide, insbesondere Brennstoffadditive wie Wasser oder Harnstofflösung in einem Kraftfahrzeug. Eine Erwärmungsvorrichtung mit den im Oberbegriff des Anspruchs 1 angegebenen Merkmalen ist aus DE 10 2010 029 663 A1, EP 0 854 345 A1 sowie US 2014/0091453 A1 bekannt.

Verbrennungsmotoren in Kraftfahrzeugen erreichen immer bessere Wirkungsgrade. Trotzdem sollen die Abgase immer weniger Rückstände wie Ruß oder Stickoxide enthalten. Dies gleichzeitig zu erreichen ist oftmals schwierig. So steigt beispielsweise mit immer weiter fortschreitender Optimierung der Verbrennung die Temperatur im Verbrennungsraum, wodurch sich in nachteiliger Weise erhöhte Stickstoff-Emissionen ergeben. Eine Reduzierung kann beispielsweise durch eine Abgasrückführung oder ein SCR-System erreicht werden. Allerdings steht bei einer Abgasrückführung dann im Volllastbetrieb zu wenig Sauerstoff zur Verfügung. Rußbildung und schlechter Wirkungsgrad durch unvollständige Verbrennung sind die Folge. Dagegen hilft die Reduktion der Temperatur im Verbrennungsraum, denn je höher die Temperatur ist, desto intensiver ist die Reaktion von Stickstoff mit Sauerstoff zu Stickoxiden.

Die Temperatur im Verbrennungsraum kann neben der regulären Kühlung der Zylinderwand am besten gesenkt werden, indem Wasser für die Kühlung im Verbrennungsraum selbst verwendet wird. Dazu kann dieses mit hohem Druck in den Verbrennungsraum eingespritzt werden. Eine andere Möglichkeit ist das Einspritzen in die Verbrennungsluft im Ansaugtrakt. In einer weiteren Alternativen wird der Kraftstoff schon vor dem Einspritzen mit Wasser gemischt und dann als Emulsion eingespritzt.

Das dazu benötigte Wasser kann über einen Kondensator aus dem Abgas oder der Klimaanlage gewonnen werden, oder aber auch zugetankt werden. In allen Fällen kann es in einem Vorratsbehälter zwischengelagert werden. Bei Temperaturen unterhalb der Gefriertemperatur kann das Wasser in diesem Vorratsbehälter und in den Leitungen des Wasserkreislaufes gefrieren, wodurch es nicht mehr dem Verbrennungsraum zugeführt werden kann.

Aber auch Harnstofflösung, die für den Einsatz von SCR-Systemen benötigt wird, friert bei -8°C im Vorratstank und dem zugehörigen Leitungssystem ein. Darüber hinaus sind auch noch andere Flüssigkeiten im Kraftfahrzeug im Einsatz, die einfrieren können.

Aufgabe ist es daher, eine geeignete Erwärmungsvorrichtung zu entwickeln, die eingefrorene Flüssigkeiten wieder auftauten kann bzw. die Flüssigkeiten über dem Gefrierpunkt halten kann. Dabei soll die Erwärmungsvorrichtung leicht und kompakt sein und eine hohe Leistungsdichte und einen hohen Wirkungsgrad haben.

Gelöst wird dies durch eine Erwärmungsvorrichtung nach Anspruch 1.

In einer vorteilhaften Ausführung weist ein monolithischer Wärmeübertrager ausgehend von einer Grundplatte beidseitig Stifte auf, die jeweils von unterschiedlichen Fluiden durchströmt werden.

Ebenso sind aber auch mehrteilige, insbesondere zweiteilige Wärmeübertrager möglich, die jeweils von einer Grundplatte ausgehend nur einseitig Stifte aufweisen, wobei dann die den Stiften abgewandten Seiten wärmeleitend, beispielsweise durch Verlöten, Verpressen, Verkleben, Verschrauben Reibschweißen usw., verbunden sind. Zwischen diesen beiden Grundplatten kann ein Heizelement angeordnet sein, beispielsweise ein keramisches PTC-Heizelement.

Vorteilhaft ist der mindestens eine Wärmeübertrager als Fließpressteil aus Aluminium oder Kupfer hergestellt, äußerst vorteilhaft durch ein kombiniertes Vorwärts- und Rückwärtsfließpressen. Dadurch kann der Strömungswiderstand und die Wärmeübertragungsfläche durch Anzahl, Geometrie und Anordnung der Stifte jeweils optimal an die Anforderungen angepasst werden, wobei diese durchaus für die beiden Seiten, sowohl bei mehrteiligen, als auch bei einem monolithischen Wärmeübertrager, verschieden ausgeführt sein kann.

Die Anzahl der Stifte, die einstückig mit einer Grundplatte ausgebildet sind, kann weitgehend frei gewählt werden. Beispielsweise kann eine Grundplatte auf einer Seite fünf oder mehr Stifte, insbesondere zehn oder mehr Stifte aufweisen. Eine vorteilhafte Weiterbildung der Erfindung sieht vor, dass einstückig mit einer Grundplatte auf einer Seite der Grundplatte wenigstens zwanzig Stifte, vorzugsweise 50 Stifte oder mehr ausgebildet sind. Mehr als 500 Stifte sind aber in der Regel mit keinen zusätzlichen Vorteilen verbunden.

Eine vorteilhafte Weiterbildung der Erfindung sieht vor, dass das Gehäuse einen Fluideinlass und einen Fluidauslass für ein zu erwärmendes Fluid aufweist. Bevorzugt weist das Gehäuse zusätzliche einen zweiten Fluideinlasse und einen zweiten Fluidauslass für ein zu kühlendes Fluid auf, beispielsweise für ein Kühlmittel eines Kühlkreislaufs. In diesem Fall kann der Innenraum des Gehäuses durch die eine Grundplatte oder die beiden Grundplatten in zwei Hälften geteilt werden, so dass durch die eine Hälfte nur das zu erwärmende und durch die andere Hälfte nur das zu kühlende Fluid strömt.

Bevorzugt ist das wärmeabgebende Fluid das Kühlmittel des Kühlmittelkreislaufes in einem Kfz. Dabei ist die Erwärmungsvorrichtung äußerst vorteilhaft in einem absperrbaren Bypass des Kühlmittelkreislaufs angeordnet, sodass das Kühlmittel auch an der Erwärmungsvorrichtung vorbeiströmen kann. Weiterhin vorteilhaft ist das wärmeaufnehmende Medium in einem Kreislauf geführt, der von einem Vorratsbehälter zur Erwärmungsvorrichtung und wieder in den Vorratsbehälter zurückführt. Dadurch wird das Fluid im Vorratstank allmählich aufgewärmt oder aufgetaut, ohne dass im Vorratsbehälter selbst eine Heizeinrichtung vorgesehen werden muss. Die Leitung zum Verbraucher kann in diesen Kreislauf integriert sein oder als separate Leitung vom Vorratsbehälter aus dorthin führen. Alle Leitungen dieses Systems können weiterhin beheizbar sein. Bei einer äußerst bevorzugten Ausführung ist das wärmeaufnehmende Fluid Wasser, das in den Verbrennungsraum zur Senkung der Temperatur eingebracht werden soll.

In einer vorteilhaften Ausbildung haben die aufragenden Stifte eine durchschnittliche Höhe von 5mm bis 15mm, insbesondere 5mm bis 10mm, und/oder eine durchschnittliche Querschnittsfläche von 1,5mm² bis 10mm² insbesondere 2mm² bis 6mm². Beides zusammen ergibt vor allem für Flüssigkeiten eine gute Wärmeübertragung, da sich gezeigt hat, dass lange, dünne Stifte im Gegensatz zur Wärmeabgabe an Luft hier eher nachteilig sind.

Auf beiden Seiten ist der monolithische oder der verbundene Wärmeübertrager von einem Gehäuse dicht umgeben, sodass eine sichere Trennung der beiden Fluidkreisläufe gewährleistet ist. Hierzu sind die gegenüberliegenden Seiten einer bzw. der Grundplatten jeweils für sich gegen das Gehäuse abgedichtet, das vorteilhaft mehrteilig, insbesondere zweiteilig, ausgeführt ist. Somit ist auch bei einer undichten Stelle immer noch keine Vermischung der Fluide möglich. Als Abdichtung ist äußerst bevorzugt hierbei eine umlaufende Dichtung in Kontakt mit der Grundplatte vorgesehen, die in eine Nut oder einen Absatz am Gehäuse oder Wärmeübertrager eingelegt sein kann.

Verpresst sind die Dichtungen bevorzugt durch Verklipsen oder Verschrauben der beiden Gehäusehälften mit dem zwischenliegenden Wärmeübertrager.

In einer vorteilhaften Weiterbildung ist das Gehäuse aus Kunststoff hergestellt. Dies ermöglicht als Spritzgussteile günstige, vielseitig ausgestaltbare Varianten bei der Geometrie und dem hydraulischen Ein- und Auslass.

Bevorzugt lassen sich in das Gehäuse noch Umlenkeinrichtungen oder Trennstege integrieren, die die Strömung in ihrer Richtung beeinflussen und lenken. Dadurch können labyrinthartige Fluidwege hergestellt sein, die noch effektiver eine Wärmeübertagung ermöglichen. Äußerst bevorzugt reichen dabei die Umlenkeinrichtungen oder Trennstege bis an die Grundplatte des Wärmeübertragers. Derartige Umlenkeinrichtungen oder Trennstege können beispielsweise an einer Innenfläche des Gehäuses angebracht sein, insbesondere einer Innenfläche einer Gehäusedecke oder eines Gehäusebodens.

Erfindungsgemäß ist in den Wärmeübertrager ein elektrisches Heizelement integriert. So kann zum Beispiel bei dem Fall, bei dem das wärmeabgebende Medium Kühlmittel ist, der Wärmeübertrager in der Startphase bei noch nicht erwärmten Kühlmittel keine Wärme abgeben. Diese Aufgabe kann in dieser Zeit von einem Heizelement übernommen werden, das wärmeleitend mit dem Wärmeübertrager verbunden ist. Bevorzugt ist dabei bei einem monolithischen Wärmeübertrager das Heizelement in eine Öffnung eingebracht und gut wärmeleitend mit diesem verbunden. Bei dem Heizelement handelt es sich um ein PTC-Element, das gerade bei geringeren Temperaturen eine hohe Leistungsabgabe hat. Weiter vorteilhaft ist die Öffnung und damit der Anschlussbereich für das Heizelement in dem Bereich aus dem Wärmeübertrager herausgeführt, der zwischen den abgedichteten Durchströmungsbereichen liegt. Dadurch kann auf eine aufwendige Abdichtung gegen die Fluide verzichtet werden. Bei einem mehrteiligen, insbesondere zweiteiligen Wärmeübertrager kann das Heizelement auch zwischen den sich zugewandten Seiten der Grundplatten angeordnet sein.

In einer weiteren bevorzugten Ausbildung sind in die Erwärmungsvorrichtung Temperaturüberwachungs- und/oder -regulierungselemente wie Sensoren oder Ventileinheiten (z. B. mit einem Dehnstoffelement) integriert. So kann z.B. in der Anfangsphase die Erwärmungsvorrichtung für den Kühlwasserkreislauf gesperrt werden. Ist dann ein zusätzliches Heizelement in der Erwärmungsvorrichtung vorgesehen, so kommt dessen Leistung ausschließlich der zu erwärmenden Flüssigkeit zugute. Für die Temperaturelemente können weitere Durchbrüche oder Bohrungen in den Gehäusen oder auch im Wärmeübertrager vorgesehen sein.

Da die zu erwärmenden Fluide wie Wasser oder Harnstofflösung im gefrorenen Zustand ein größeres Volumen als im flüssigen Zustand einnehmen, ist innerhalb des Gehäuses in einer weiteren vorteilhaften Ausbildung ein komprimierbares Ausdehnungselement angeordnet. Dieses kann beispielsweise auf Basis eines geschlossenzelligen Schaumstoffes, oder eines gasgefüllten Beutels, z.B. aus Folien zusammengeschweißt, hergestellt sein. Das Ausdehnungselement kann beispielsweise an dem Gehäuse oder an der Grundplatte befestigt sein

In einer weiteren bevorzugten Ausführung ist der Wärmeübertrager zumindest an den mit einer Flüssigkeit in Kontakt stehenden Flächen mit einer Beschichtung versehen. Dies kann eine Kunststoffbeschichtung sein, äußerst bevorzugt ist jedoch eine galvanische Beschichtung wie eine Vernickelung vorgesehen.

Weitere Vorteile und Merkmale ergeben sich aus den Ansprüchen und den Ausführungsbeispielen, die den Zeichnungen und der zugehörigen Beschreibung zu entnehmen sind. Dabei zeigt
Fig. 1 eine perspektivische Darstellung der Erwärmungsvorrichtung ohne obere Gehäusehälfte
Fig. 2 eine perspektivische Darstellung des Wärmeübertragers in monolithischer Ausführung
Fig. 3 eine perspektivische Darstellung der Gehäusehälften mit innenliegenden, hier nicht sichtbaren Wärmeübertrager
Fig. 4 eine schematische Darstellung der Flüssigkeitskreisläufe durch die Erwärmungsvorrichtung

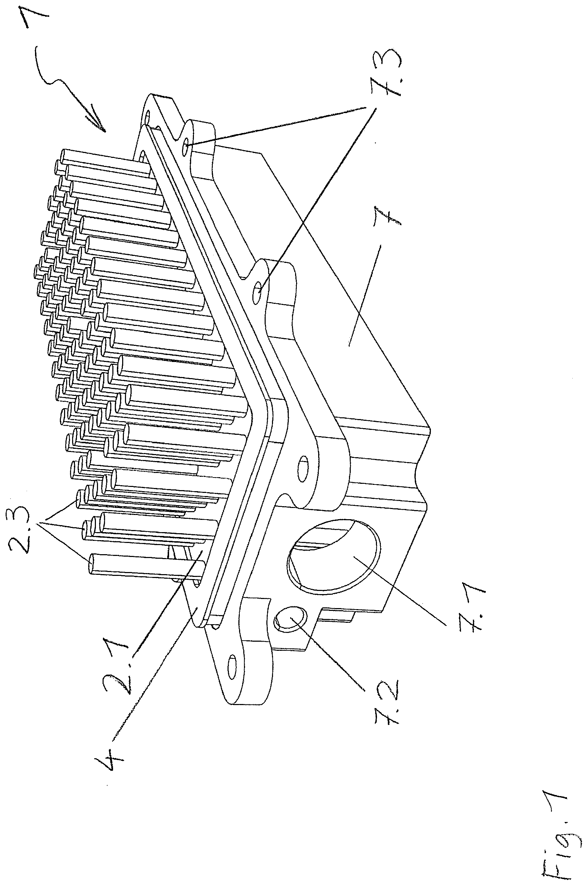

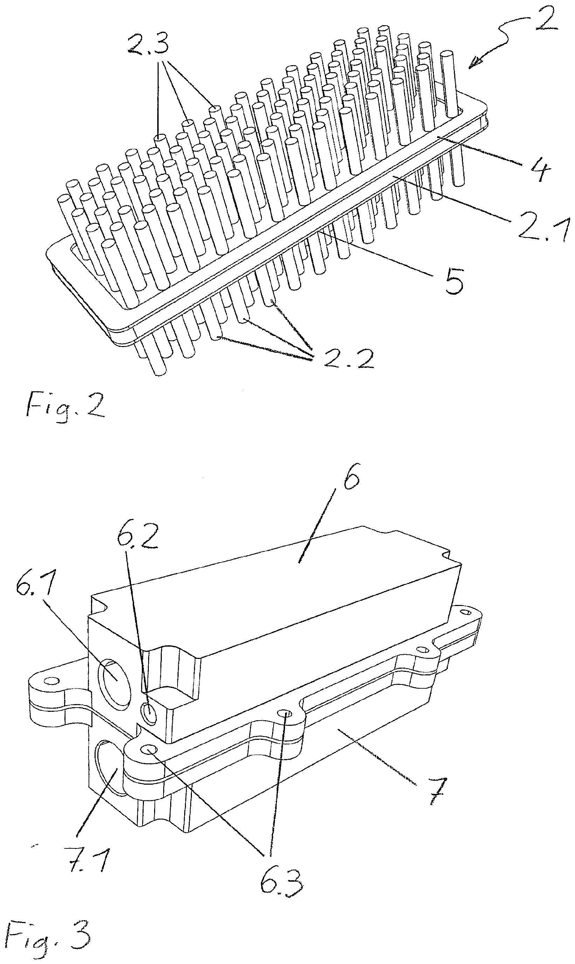

Die Figuren 1 bis 3 sind verschiedene Darstellungen einer Ausführungsvariante der Erwärmungsvorrichtung 1 mit einem monolithischen Wärmeübertrager 2 und zwei getrennten Gehäusehälften 6, 7. Wie in Fig. 2 zu sehen ist, ragen beiderseits einer im Wesentlichen ebenen Grundplatte 2.1 einzelne Stifte 2.2, 2.3 auf, die einstückig mit der Grundplatte 2.1 ausgebildet sind. Die Stifte 2.2, 2.3 sind durch Fließpressen hergestellt. Sie haben über ihre Länge jeweils einen gleichbleibenden Durchmesser und ragen senkrecht von der Grundplatte 2.1 auf.

Die hier gezeigte runde Querschnittsversion ist nur beispielhaft. Je nach Strömungsanforderungen können die Stifte jede andere Querschnittsform wie oval oder eckig haben, wobei sie auch untereinander in Höhe, Dicke und Form verschieden sein können. Auch die Geometrie zueinander kann beliebig ausgestaltet sein, etwa um den Fluidstrom zu beeinflussen oder um sie auf Stege des Gehäuses abstimmen zu können. Die Anzahl der Stifte kann weitgehend frei gewählt werden. Um eine gute Wärmeübertragung zu erzielen sollten wenigstens fünf Stifte 2.2, 2.3 einstückig mit der Grundplatte 2.1 ausgebildet sein. Gute Ergebnisse werden insbesondere mit Grundplatten 2.1 erzielt, die zehn oder mehr Stifte 2.2, 2.3 aufweisen, beispielsweise wenigsten zwanzig Stifte 2.2, 2.3 oder sogar mehr als 50 Stifte 2.2, 2.3.

Beide Seiten der Grundplatte 2.1 sind jeweils von einer Gehäusehälfte 6, 7 umgeben, die Grundplatte 2.1 liegt also zwischen den Gehäusehälften 6, 7. In diesen sind jeweils zwei Öffnungen 6.1, 7.1 an sich gegenüberliegenden Seiten (jeweils 2. Öffnung in den Zeichnungen nicht zu sehen) als Fluideinlass und Fluidauslass ausgebildet. Zusätzlich können auch noch weitere Öffnungen oder Bohrungen 6.2, 7.2 z.B. für Temperaturelemente vorhanden sein.

Umlaufend um die Stifte 2.2, 2.3 sind auf beiden Seiten der Grundplatte 2.1 Dichtungen 4, 5 vorhanden, die die Fluide im Gehäuse 6, 7 der Erwärmungsvorrichtung 1 nach außen abdichten. Dadurch ist jedes Fluid für sich abgedichtet. Zur Vermischung der Fluide kann es daher auch dann nicht kommen, wenn eine der Dichtungen defekt ist.

Weitere, bezogen auf die Gehäusehälften fluchtende, Durchbrüche 6.3, 7.3 sind vorgesehen, um die Erwärmungsvorrichtung aus Wärmeübertrager 2 und Gehäusehälften 6, 7 zu montieren. Mit Hilfe dieser Durchbrüche 6.3, 7.3 sind die Gehäusehälften 6, 7 mit zwischenliegenden Wärmeübertrager 2 dicht durch Komprimieren der Dichtungen 4, 5 gegeneinander verspannt. Dies erfolgt in diesem Ausführungsbeispiel durch eine Verschraubung, also durch die Durchbrühe hindurchgreifende Schrauben. Die Durchbrüche 6.3, 7.3 sind in einem Flansch auf gegenüberliegenden Längsseiten des Gehäuses angeordnet. Andere Arten der Verspannung, z.B. Verklipsen, auch ohne die Durchbrüche 6.3, 7.3 sind ebenso denkbar. Weiterhin kann auch bei einem mehrteiligen Gehäuse jedes Teil für sich dicht am Wärmeübertrager befestigt sein.

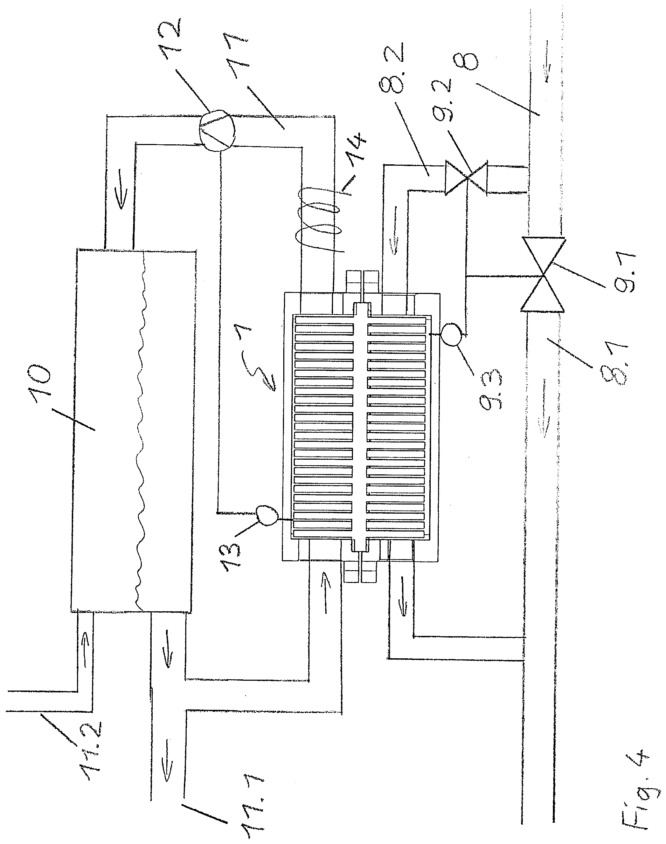

In Fig. 4 sind beispielhafte Flüssigkeitskreisläufe durch die Erwärmungsvorrichtung 1 dargestellt. Auf der unteren Hälfte im Bild wird die Erwärmungsvorrichtung 1 vom Kühlmittel eines Kfz durchflossen. Vor dem Durchfluss durch die Erwärmungsvorrichtung ist der Kühlmittelstrom aufgeteilt. Ein Teil 8.2 wird durch die Erwärmungsvorrichtung 1 geführt, ein anderer Teil 8.1 daran vorbei. Wie das Kühlmittel geführt wird, kann durch Ventile 9.1, 9.2 gesteuert werden, insbesondere mit Hilfe von Temperatursensoren wie 9.3. Beide Funktionen zusammen können beispielsweise auch von Thermostatventilen mit einem Dehnstoffelement wahrgenommen werden.

Nach dem Gegenstromprinzip, denkbar wäre aber auch das Gleichstrom- oder Kreuzstromprinzip, wird durch die obere Hälfte der Erwärmungsvorrichtung 1 Wasser zum Absenken der Temperatur im Verbrennungsraum vom Vorratsbehälter 10 zur Erwärmungsvorrichtung und wieder zurück als Kreislauf geführt. Davon zweigt eine Leitung 11.1 in Richtung Verbrennungsraum ab. Gespeist wird der Vorratsbehälter durch die Zuleitung 11.2, die Wasser von einem Kondensator oder durch Betankung zuführt. Um den Kreislauf aufrecht zu erhalten, kann weiterhin eine Pumpe 12 in den Kreislauf integriert sein. Die Pumpe kann beispielweise in Abhängigkeit von einem Sensor 13 gesteuert werden.

Alle Leitungen des Systems können eine Beheizung 14 aufweisen. Zudem weist die Erwärmungsvorrichtung 1 ein elektrisches Heizelement, insbesondere ein PTC-Heizelement in wärmeleitender Verbindung zum Wärmeübertrager auf. Das Heizelement kann beispielsweise in oder an dem Gehäuse angebracht sein. Wenn zwei Grundplatten 2.1 vorgesehen sind, die jeweils nur auf einer Seite Stifte 2.2 aufweisen, kann das Heizelement auch zwischen den beiden Grundplatte angeordnet sein.

## Patentansprüche

1. Erwärmungsvorrichtung für Fluide in einem Kraftfahrzeug mit mindestens einem Gehäuse und einem Wärmeübertrager (2), wobei der Wärmeübertrager (2) aufragend von einer Grundplatte (2.1) einzelne, einstückig mit der Grundplatte (2.1) verbundene Stifte (2.2, 2.3) zur Vergrößerung der Wärmeübertragungsfläche aufweist, **dadurch gekennzeichnet, dass** sie ein elektrisches PTC-Heizelement in wärmeleitender Verbindung zum Wärmeübertrager (2) aufweist.

2. Erwärmungsvorrichtung nach Anspruch 1, **dadurch gekennzeichnet, dass** der Wärmeübertrager (2) beidseitig aufragend von einer Grundplatte (2.1) einzelne, einstückig mit der Grundplatte (2.1) verbundene Stifte (2.2, 2.3) aufweist.

3. Erwärmungsvorrichtung nach Anspruch 1 oder 2, **dadurch gekennzeichnet, dass** der Wärmeübertrager (2) im Fließpressverfahren aus einem gut wärmeleitenden Material wie Aluminium oder Kupfer oder jeweils einer Legierung davon hergestellt ist, insbesondere im kombinierten Vorwärts- und Rückwärtsfließpressverfahren.

4. Erwärmungsvorrichtung nach mindestens einem der vorhergehenden Ansprüche, **dadurch gekennzeichnet, dass** das Gehäuse von zwei getrennten, gegeneinander abgedichteten Fluiden durchströmt wird, die dabei Wärme austauschen.

5. Erwärmungsvorrichtung nach mindestens einem der vorhergehenden Ansprüche, **dadurch gekennzeichnet, dass** ein durchströmendes Fluid das Kühlwasser eines Kühlwasserkreislaufes in einem Kfz ist.

6. Erwärmungsvorrichtung nach mindestens einem der vorhergehenden Ansprüche, **dadurch gekennzeichnet, dass** ein durchströmendes Fluid ein Brennstoffadditiv zur Senkung der ausgestoßenen Schadstoffe wie Wasser oder Harnstofflösung ist.

7. Erwärmungsvorrichtung nach mindestens einem der vorhergehenden Ansprüche, **dadurch gekennzeichnet, dass** das Gehäuse ein mehrteiliges Gehäuse, insbesondere zweiteiliges Gehäuse ist, das die beiden Fluidströme jeweils gegen den Wärmeübertrager (2) abdichtet.

8. Erwärmungsvorrichtung nach Anspruch 7, **dadurch gekennzeichnet, dass** mindestens zwei Gehäuseteile (6, 7) des mehrteiligen Gehäuses mit dem zwischenliegenden Wärmeübertrager (2) gegeneinander verspannt sind.

9. Erwärmungsvorrichtung nach Anspruch 8, **dadurch gekennzeichnet, dass** zwischen jedem der beiden Gehäuseteile (6, 7) und der Grundplatte (2.1) jeweils wenigstens eine Dichtung (4, 5) angeordnet ist.

10. Erwärmungsvorrichtung nach Anspruch 8 oder 9, **dadurch gekennzeichnet, dass** jeder der beiden Gehäuseteile (6, 7) jeweils einen Fluideinlass (6.1, 7.1) und einen Fluidauslass (6.1, 7.1) aufweist.

11. Erwärmungsvorrichtung nach eine der Ansprüche 8 bis 10, **dadurch gekennzeichnet, dass** die beiden Gehäuseteile (6, 7) an gegenüberliegenden Längsseiten eine Flansch aufweisen, der Durchbrüche (6.3, 7.3) für die beiden Gehäuseteile (6, 7) verbindende Schrauben aufweist.

12. Erwärmungsvorrichtung nach mindestens einem der vorhergehenden Ansprüche, **dadurch gekennzeichnet, dass** das Gehäuse Umlenkeinrichtungen oder Trennstege aufweist, die die Strömung in ihrer Richtung beeinflussen.

13. Erwärmungsvorrichtung nach mindestens einem der vorhergehenden Ansprüche, **dadurch gekennzeichnet, dass** das Gehäuse ein komprimierbares Ausdehnungselement aufweist.

14. Erwärmungsvorrichtung nach mindestens einem der vorhergehenden Ansprüche, **dadurch gekennzeichnet, dass** die Grundplatte (2.1) einstückig mit wenigstens fünf Stiften (2.2. 2.3), vorzugsweise wenigstens zehn Stiften (2.2, 2.3) ausgebildet ist.

## Claims

1. A heating device for fluids in a motor vehicle, comprising at least one housing and a heat exchanger (2), the heat exchanger (2) comprising individual pins (2.2, 2.3), which project upwardly from a base plate (2.1) and are integrally connected to the base plate (2.1), for increasing the heat transfer surface area, **characterized by** comprising an electrical PTC heating element in heat-conducting connection to the heat exchanger (2).

2. The heating device according to claim 1, **characterized in that** the heat exchanger (2) comprises individual pins (2.2, 2.3), which project upwardly from a base plate (2.1) and are integrally connected to the base plate (2.1), on both sides.

3. The heating device according to claim 1 or 2, **characterized in that** the heat exchanger (2) is produced in an extrusion process from a material having good thermal conductivity, such as aluminum or copper, or a respective alloy thereof, in particular in a combined direct and indirect extrusion process.

4. The heating device according to at least one of the preceding claims, **characterized in that** two separate fluids, which are sealed with respect to one another, flow through the housing, exchanging heat in the process.

5. The heating device according to at least one of the preceding claims, **characterized in that** a fluid flowing through is the cooling water of a cooling water circuit in a motor vehicle.

6. The heating device according to at least one of the preceding claims, **characterized in that** a fluid flowing through is a fuel additive for lowering emission of harmful substances, such as water or urea solution.

7. The heating device according to at least one of the preceding claims, **characterized in that** the housing is a multi-piece housing, and in particular a two-piece housing, which seals each of the two fluid flows with respect to the heat exchanger (2).

8. The heating device according to claim 7, **characterized in that** at least two housing parts (6, 7) of the multi-piece housing are braced with respect to one another, together with the interposed heat exchanger (2).

9. The heating device according to claim 8, **characterized in that** at least one respective gasket (4, 5) is arranged between each of the two housing parts (6, 7) and the base plate (2.1).

10. The heating device according to claim 8 or 9, **characterized in that** each of the two housing parts (6, 7) includes a respective fluid inlet (6.1, 7.1) and a fluid outlet (6.1, 7.1).

11. The heating device according to any one of claims 8 to 10, **characterized in that** the two housing parts (6, 7), on opposing longitudinal sides, comprise a flange, which includes apertures (6.3, 7.3) for bolts connecting the two housing parts (6, 7).

12. The heating device according to at least one of the preceding claims, **characterized in that** the housing comprises deflection units or separating webs, which influence the direction of the flow.

13. The heating device according to at least one of the preceding claims, **characterized in that** the housing comprises a compressible expansion element.

14. The heating device according to at least one of the preceding claims, **characterized in that** the base plate (2.1) is designed integrally with at least five pins (2.2, 2.3), and preferably at least ten pins (2.2, 2.3).

## Revendications

1. Dispositif de chauffage pour fluides dans un véhicule à moteur avec au moins un boîtier et un échangeur de chaleur (2), où l'échangeur de chaleur (2) présente des broches (2.2, 2.3) individuelles émergeant d'une plaque de base (2.1) reliées avec la pièce de base (2.1) en une seule pièce permettant l'agrandissement de la surface d'échange de chaleur, **caractérisé en ce qu'**il présente un élément de chauffage électrique en céramique PTC en communication par conduction de chaleur vers l'échangeur de chaleur (2).

2. Dispositif de chauffage selon la revendication 1, **caractérisé en ce que** l'échangeur de chaleur (2) présente sur les deux côtés des broches (2.2, 2.3) individuelles émergeant d'une plaque de base (2.1) reliées avec la pièce de base (2.1) en une seule pièce.

3. Dispositif de chauffage selon la revendication 1 ou la revendication 2, **caractérisé en ce que** l'échangeur de chaleur (2) est fabriqué par le procédé d'extrusion par compression à partir d'un matériau bon thermo-conducteur comme l'aluminium ou le cuivre, ou respectivement un alliage de ceux-ci, notamment par le procédé d'extrusion par compression combiné vers l'avant et vers l'arrière.

4. Dispositif de chauffage selon au moins l'une des revendications précédentes, **caractérisé en ce que** le boîtier est écouleé a travers par deux fluides séparés étanches l'un vis-à-vis de l'autre qui échangent ainsi de la chaleur.

5. Dispositif de chauffage selon au moins l'une des revendications précédentes, **caractérisé en ce qu'**un fluide s'écoulant à travers est l'eau de refroidissement d'un circuit d'eau de refroidissement dans un véhicule à moteur.

6. Dispositif de chauffage selon au moins l'une des revendications précédentes, **caractérisé en ce qu'**un fluide s'écoulant à travers est un aditif de carburant permettant la diminution des produits nocifs rejetés comme l'eau ou une solution d'urée.

7. Dispositif de chauffage selon au moins l'une des revendications précédentes, **caractérisé en ce que** le boitier est un boitier en plusieurs parties, est notamment un boitier en deux parties, qui rend les deux écoulements de fluides respectivement étanches vis-à-vis de l'échangeur de chaleur (2).

8. Dispositif de chauffage selon la revendication 7, **caractérisé en ce qu'**au moins deux parties de boitier (6, 7) du boitier en plusieurs parties sont appariées l'une à l'autre avec l'échangeur de chaleur (2) se situant entre elles.

9. Dispositif de chauffage selon la revendication 8, **caractérisé en ce qu'**au moins un joint d'étancheité (4, 5) est disposé respectivement entre chacune des deux parties de boitier (6, 7) et la plaque de base (2.1).

10. Dispositif de chauffage selon la revendication 8 ou la revendication 9, **caractérisé en ce que** chacune des deux parties de boitier (6, 7) présente respectivement une entrée de fluide (6.1, 7.1) et une sortie de fluide (6.1, 7.1).

11. Dispositif de chauffage selon l'une des revendications 8 à 10, **caractérisé en ce que** les deux parties de boitier (6, 7) présentent un épaulement sur des côtés longitudinaux situés les uns en face des autres, qui présente des alésages (6.3, 7.3) pour les vis reliant les deux parties de boitier (6, 7).

12. Dispositif de chauffage selon au moins l'une des revendications précédentes, **caractérisé en ce que** le boitier présente des dispositifs de déviation ou des entretoises de séparation qui exercent une influence sur l'écoulement dans sa direction.

13. Dispositif de chauffage selon au moins l'une des revendications précédentes, **caractérisé en ce que** le boitier présente un élément d'extension compressible.

14. Dispositif de chauffage selon au moins l'une des revendications précédentes, **caractérisé en ce que** la plaque de base (2.1) est conçue en une seule pièce avec au moins cinq broches (2.2, 2.3), de préférence, au moins dix broches (2.2, 2.3).
